Europäisches Patentamt

European Patent Office

Office européen des brevets

(11) Publication number: **0 418 658 A2**

# EUROPEAN PATENT APPLICATION

(21) Application number: **90117116.5**

(51) Int. Cl.5: **G06F 13/26**

(22) Date of filing: **05.09.90**

(30) Priority: **21.09.89 JP 300701/89**

(43) Date of publication of application:
**27.03.91 Bulletin 91/13**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Uchikoga, Hiroshi, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) Serial interface control system and method therefor.

(57) A plurality of serial ports (55, 56), a built-in modem slot (52), a propriety slot (51), and an industrial standard slot (53) are provided. Interrupt request levels of these serial ports, slots, and input/output base addresses, are set in a setup processing through a keyboard. Circuits (62, 63, 64, 65) are provided for disabling modem inserted in the built-in modem slot when an optional modem is inserted in the propriety slot (51). Interrupt request levels from the serial port and from the slots and the interrupt level from the industrial standard slot are wire-ORed. When an industrial standard board is inserted in the industrial standard slot, the serial ports, the built-in modem slot, and the propriety slot are disabled.

EP 0 418 658 A2

FIG. 2

The present invention relates to a serial interface control system and a method therefor, which are suited for use in a personal computer incorporating a plurality of serial ports and slots.

Recently, reflecting significant progress in the semiconductor production technology, a variety of semi-conductor electronic devices such as microprocessors, memory LSIs, and peripheral-unit controlling LSIs, for example, are easily available at inexpensive cost. As a result, by properly combining these sophisticated electronic devices with each other, a high-performance personal computer system can easily be composed today. Furthermore, taking the software field for example, standard operating systems (OS) have also been introduced so that software property can effectively be utilized.

Typical structure of such a conventional personal computer incorporating the above hard-and-software will now be described, where this typical personal computer is called "industrial standard personal computer" for convenience.

Conventionally, such an industrial standard personal computer is optionally provided with a serial port in most cases. Even though tLe provision of a serial port has been standardized today, normally, only one port is available. A slot is also provided for allowing insertion of an optional board. When inserting the optional board like a memory board or a modem board into this slot, the priority order of interruption is determined by hardware like a DIP switch, or the like. Furthermore, conventionally, the serial port addresses are set by operating the DIP switch. In consequence, address setting process involves complexity, and yet, the process for setting the optional board to the predetermined position on the bottom of the personal computer is a bothersome work on the part of users.

Further, a variety of peripheral units have been developed in these years for personal computers. As a result, users desire to arbitrarily use these peripheral units. Nevertheless, even if users desire to use, for example, either an extension memory card or a local-area-network (LAN) card in addition to the connection of a mouse and a modem to the personal computer, the number of available serial port and slot for insertion of optional board is extremely limited. For this reason, user cannot use either of these.

In the course of executing an application program using an industrial standard personal computer which is provided with a constant modem unit solely available for this personal computer, users also desire to use a modem board optionally selected by them. In an extreme case, users may attempt to insert a modem board into the optional board slot without being aware of the presence of the internally loaded modem. In this case, a pair of modem boards compete with each other. To prevent this, it is desired that the presence of the two modems in the identical computer be automatically identified so that one of these can be enabled.

An object of the invention is to provide a serial interface control system which incorporates a plurality of serial ports and slots and allows either a keyboard or a mouse to set up addresses and priority order of interrupt level for these serial ports and slots.

Another object of the invention is to provide a serial interface control system which is provided with a slot solely available for a built-in modem, a slot solely available for an optional board, and a standard slot specified by any conventional industrial standard personal computer, wherein the serial interface control system of the invention can internally load two kinds of modems, automatically identify the presence or absence of the two kinds of modems, and variably set addresses and interrupt levels of these modems.

According to a first aspect of the invention, a serial interface control system for use in a personal computer comprises: a serial port for allowing connection of input/output units; a slot for allowing connection of an optional board; and means for setting, by software, interrupt levels and input/output base addresses of said serial port and said optional board.

According to a second aspect of the invention, a serial interface control system for use in a personal computer comprises: at least one serial port; at least two slots for allowing insertion of optional boards; and means for detecting whether the optional boards are inserted into both the two slots; and means for setting, in a setup processing for the personal computer, an interrupt level and input and output addresses of the serial port and the optional boards.

According to a third aspect of the invention, a serial interface control system for use in a personal computer comprises: a first slot which allows insertion of a first modem therein; a second slot which allows insertion of the second modem therein; means for detecting that the first and second modems are respectively inserted in the first and second slots; and means for disabling one of the first and second slots in response to the result of detection of the first and second modems inserted in the first and second slots.

According to a fourth aspect of the invention, a serial interface control system for use in a personal computer comprises: at least one serial port; at least one slot for allowing insertion of an optional board therein; means for setting, in a setup processing interrupt levels and input/output addresses of the serial port and the optional board; means for decoding the set input/output addresses and enabling the corresponding serial port and optional board; and selection means for receiving interrupt request level signals from the serial port and the optional board in addition to decoded data from said decoding means, and for selecting interrupt request level of the corresponding serial port or optional board, based on the decoded data.

According to a fifth aspect of the invention, a serial interface control method for use in a personal computer provided with a serial port for allowing connection of input/output units and a slot for allowing connection of an optional board thereto, said method comprises the steps of: setting, by software, interrupt level and input/output base addresses of the serial port and the optional board; and controlling an interrup of the serial port and the optional board based on the set interrupt level and the input/output base addresses.

According to a sixth aspect of the invention, a serial interface control method for use in a personal computer provided with a first slot for allowing insertion of a first modem and a second slot for allowing insertion of a second modem therein, said method comprises the steps of: detecting that said first and second modems are respectively inserted in the first and second slots; and disabling one of the first and second modems in response to the detection of the first and second modems inserted in the first end second slots.

According to the serial interface control system of the invention, an industrial standard slot, a modem built-in slot, and an optional board slot, and two serial ports, are respectively provided therein. Entry of addresses and interrupt levels for these is executed by operating a keyboard, for example. The serial interface control system of the invention automatically identifies that two kinds of modems concurrently loaded in the system, and then performs a control operation to enable only the modem loaded in the optional board slot. Furthermore, when an industrial standard optional board is inserted in the standard optional board slot, the serial interface control system of the invention controls the interrupt level so that the interrupt level of the standard optional board can become effective.

This invention can be more fully understood from the following detailed description when taken in conjunction with the accompanying drawings, in which:

Fig. 1 is a schematic block diagram of a personal computer to which the serial interface control system of the invention is applied;

Fig. 2 is a schematic block diagram of the serial interface control system of the invention;

Fig. 3 is a flowchart designating an operating sequence of the personal computer shown in Fig. 1;

Fig. 4 is a circuit block diagram of the hardware automatically identifying the inserted two modems;

Fig. 5 is a table showing an example of correspondence between the serial port, interrupt levels of respective slots, and the input/output port base addresses; and

Fig. 6 illustrates an example of a setup-menu screen for setting the interrupt levels and the interrupt addresses shown in Fig. 5

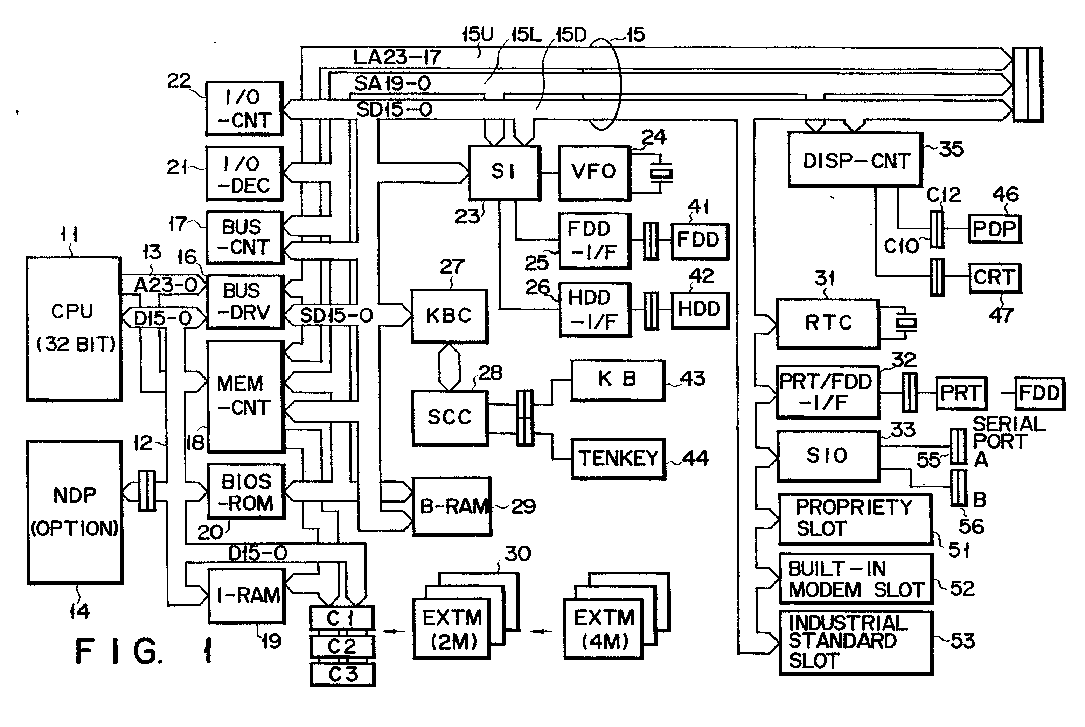

Referring to Fig. 1, central processing unit (CPU) 11 comprises a 32-bit CPU-chip for example, which controls the entire system. The CPU 11 is connected to internal data buses 12 and 13. Internal bus is comprises the internal data bus 12 and an internal address bus of 24-bit width. Numerical data processor 14 is connected to the internal data bus 12 via an optional connector. System but 15 comprises a data bus 15D of 16-bit width, a lower address bus 15L of 20-bit width, and an upper address bus 15U of 7-bit width. Bus driver (BUS-DRV) 16 performs function as an interface connecting the inner data buses 12 and 13 to the system bus 15. Bus controller (BUS-CNT) 17 controls the system bus 15. Memory controller (MEM-CNT) 18 controls transfer of addresses between the address buses 13, 15U, and 15L, and controls the read/write operation for main memory 19.

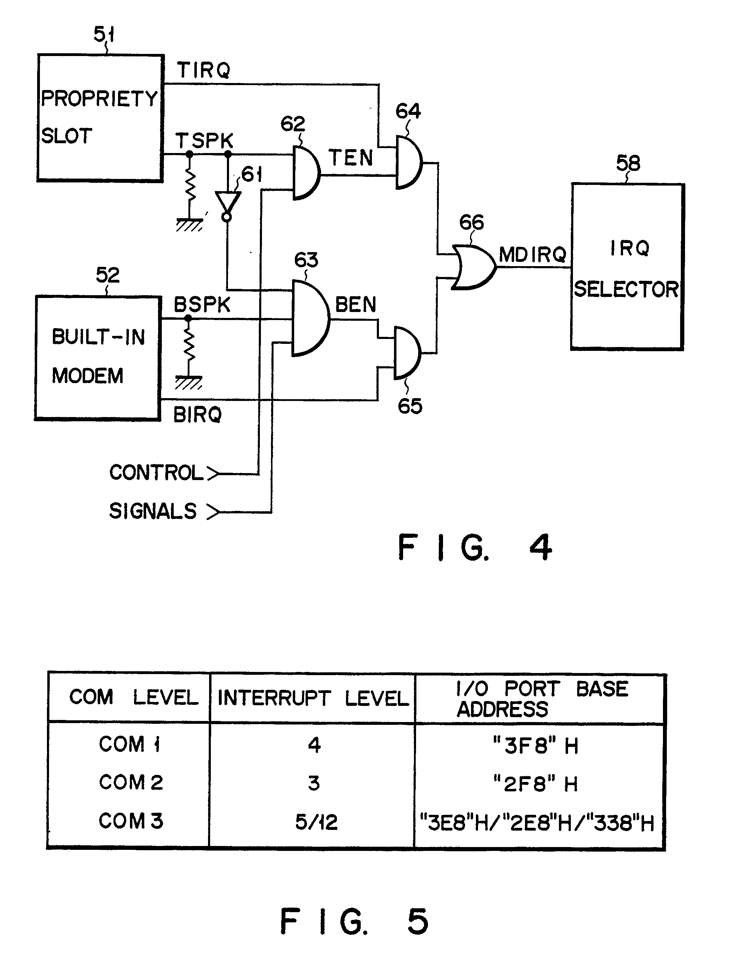

BIOS-ROM 20 stores basic input and output system program BIOS. The BIOS includes such an initializing routine shown in Fig. 4. Input/output decoder (I/O-DEC) decodes input/output addresses on the system bus 15 and then transmits the decoded input/output addresses to the corresponding I/O element (chip). Input/output controller (I/O-CONT) 22 controls input and output data. A super integration IC (SI) 23 incorporates a variety of input/output controllers including a floppy-disc interface, a hard-disc interface, a DMA controller, and an interrupt controller, and the like. Frequency oscillator (VFO) 24 generates clock pulses for floppy-disc driving unit (FDD). Floppy-disc interface (FDD-I/F) 25 and hard-disc interface (HDD-I/F) 26 respectively interface floppy discs and hard discs with the super integration IC23. Keyboard controller (KBC) 27 is connected to the system bus 15, whereas keyboard scan controller (SCC) 28 is connected to the keyboard controller 27. Backup RAM (B-RAM) 29 is used for executing resume function. Extension memory card (EXTM) 30 is optionally connected to extension memory card connectors C1 through C3. Clock module (RTC: real-time clock) 31 incorporates an independently operating cell and a memory (CMOS-RAM) which is backed up by this cell. Input/output port (PRT/FDD-IF) 32 is connected to input/output units such as an external floppy-disc drive (FDD) and a printer (PRT). An interface unit RS-232C is connected to a serial I/O interface (SIO) 33 via two serial ports 55 and 56.

Furthermore, an industrial standard slot 53, a built-in modem slot 52, and a propriety slot 51 are provided. In this embodiment, the priorities of the interrupt levels are given to those slots in the order of the industrial standard slot 53, propriety slot 51, and the built-in modem slot 52, respectively.

Display controller (DISP-CNT) 35 serves as a display subsystem in the serial interface system. More specifically, the display controller 35 drives a plasma display and a CRT display. A variety of extension modules such as the display controller 35 serving as a display subsystem, for example can be connected to an extension connector 36. Floppy-disc driver 41 installed in the control system is connected to the floppy-disc interface 25. Hard-disc drive (HDD) 42 is connected to the hard-disc drive interface 26. A keyboard unit (KB) 43 is connected to the keyboard scan controller 28.

In addition, numeric key pad 44 is also connected to the scan controller 28. A back-lit LCD 45, a PDP 46, and a CRT 47, are connected to the display controller 35. A flat-panel display connector C10 is connected to the display controller 35. Either connector CII of the LCD 45 or connector C12 of the PDP 45 is connected to the flat-panel display connector C10. The display connector C10 is provided with two special pins which generate signals for identifying the connected state of the flat-panel display. Signals designating the connection of the flat-panel display generated by the two special pins are read by the CPU 11 via an I/O register provided in the display controller 35.

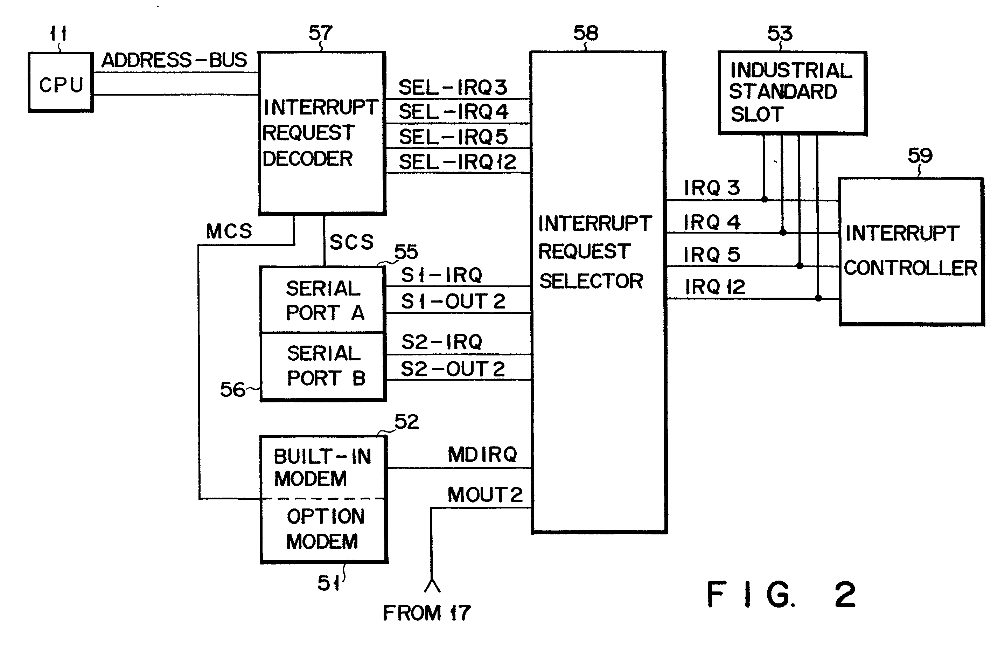

Fig. 2 illustrates a main section of the serial interface control system of the invention. Referring to Fig. 2, the CPU 11 is connected to an interrupt request decoder 57 via an address bus. The CPU 11 transmits a data designating interrupt level set by a setup program to the interrupt request decoder 57. The decorder 57 then decodes the data designating the interrupt level, and then outputs SEL-IRQ signal designating which one of the interrupt levels has been set to which one of these serial ports 55 and 56 and modems (either a built-in modem 52 or an optional modem inserted in the propriety slot). For example, there are three kinds of the SEL-IRQ signals including AIRQ3 (interrupt level IRQ3 for serial port A), BIRQ3 (interrupt level IRQ3 for serial port 3), and MIRQ3 (interrupt level IRQ3 for the modems). One of these three signals is output to an interrupt request selector 58 as the selected data. Likewise, one of those three kinds of interrupt levels of other SEL-IRE4, SEL-IRQ5, and SEL-IRQ12, is also output to the interrupt request selector 58 as the selected data. Referring to Fig. 2, physically, there are two slots including the propriety slot 51 and the built-in slot 52. However, whenever the modem is inserted, either of these slots is always identified by the CPU 11. The interrupt request decoder 57 transmits chip select signal SCS to the serial ports 55 and 56 and the modems 51 and 52. The serial port A55 outputs S1-IRQ signal and S1-OUT2 signal. The serial port B outputs S2-IRQ signal and S2-OUT2. The IRQ signal designates interrupt request signal. The OUT2 signal designates that the serial port A (or the serial port B) is in use. The modem 51 or 52 receives the chip select signal SCS, and then outputs MDIRQ signal shown in Fig. 4 to the interrupt request selector 58. The bus controller 17 outputs MOUT2 signal to the interrupt request selector 58.

The interrupt request selector 58 outputs an interrupt signal corresponding to the selected data from the interrupt request decoder 57 to interrupt controller 59. For example, when the AIRQ3 signal is output from the interrupt request decoder 57, the interrupt request selector 58 outputs the interrupt signal S1-IRQ of the serial port A55 to the interrupt controller 59 as the interrupt signal IRQ3. When the BIRQ3 signal is output from the interrupt request decoder 57, the selector 58 outputs the interrupt signal S2-IRQ of the serial port $B_{56}$ to the interrupt controller 59 as the interrupt signal IRQ3. Furthermore, when the signal MIRQ3 is output, the interrupt signal MDIRQ from the modem is output as the interrupt signal IRQ3.

More specifically, the interrupt request selector 58 assigns three interrupt levels out of four levels including IRQ3, IRQ4, IRQ5, and IRQI2, to the two serial ports 103 and two modems 51 or 52, based on the signals XIRQX and XOUT, and the SEL-IRQ signal from the interrupt request decorder. These interrupt level signals are transmitted to the interrupt controller 13, which then controls the interrupt priority order based on the data of signals.

An industrial standard slot 53 is wire-ORed with the output of the interrupt request selector to be connected to the interrupt controller 59. When an industrial standard board is loaded in the industrial standard optional slot 53, the IRQ signal from the interrupt request selector 58 is inhibited, but only the IRQ signal from the industrial standard board can be accepted. When the interrupt controller 59 accepts the interrupt requests from the industrial standard slot 53, propriety slot 51, and the built-in modem slot 52, the interrupt controller 59 determines the priority of the interrupt levels in the order of the industrial standard slot 53, propriety slot 51, and the built-in modem slot 52.

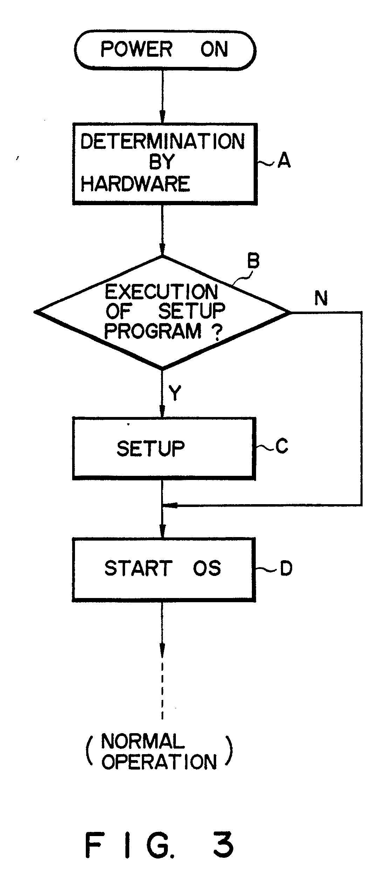

Fig. 3 illustrates the flowchart designating the operating sequence of a personal computer to which the serial interface control system of the invention is applied. When the power is turned on, a determination mechanism shown in Fig. 4 operates in step A. The determination mechanism determines whether or not a built-in modem is actually loaded in the built-in modem slot. It also determines whether or not an optional modem is actually loaded in the propriety slot. If neither the built-in modem is loaded in the built-in modem slot nor the optional modem is loaded in the propriety slot, a specified signal line becomes "HIGH" level. Accordingly, the determination mechanism checks the specified line to determine whether or not the modem is inserted. In this embodiment, when the determination mechanism determines that two of the modems are actually inserted in the built-in modem slot 52 and the propriety slot 51, the determination mechanism controls the propriety slot 51 to be enabled.

Then, the CPU 11 determires whether setup processing should be executed or not, in other words, it determines whether the user has specified the setup processing. If the setup processing is not specified by the user, the control proceeds to step D. Conversely, if the setup processing is specified by the user, the setup processing is executed in step C, and then the control proceeds to step D. In step D, an operating system is loaded into I-RAM 19 from the FDD 41 for example, and then the operating system is executed.

Fig. 4 illustrates the determination mechanism. Those components identical to those shown in Fig. 2 are designated by the identical reference numerals. In Fig. 4, signal BSPK of the built-in modem slot 52 and signal TSPK of the propriety slot 51 are special signals for identifying whether the a[,ove modems are loaded or not. When the above modems are absent, these signals BSPK and TSPK remain "LOW" level. When the power is turned on after completing insertion of the optional modem in the propriety slot 51, the signal TSPK goes HIGH. Likewise, when the power is turned on after completing insertion of the built-in modem in the built-in modem slot 52, the signal BSPK goes HIGH. The HIGH-level signal TSPK is transmitted to one of input terminals of AND gate 62. Further, the signal TSPK is inverted by an inverter 61 to be supplied to the first input terminal of AND gate 63. Furthermore, the HIGH-level signal BSPK is supplied to the second input terminal of the AND gate 63. Furthermore, control signal from the CPU 11 is supplied to the other input terminal of AND gate 62 and the third input terminal of the AND gate 63. As a result, when the built-in modem is loaded in the built-in modem slot 52 and the optional modem is loaded in the propriety slot 51, "LOW" level signal is supplied to the AND gate 63 via the inverter 61. Accordingly, "HIGH" level signal TEN is output from the AND gate 62, whereas "LOW" level signal BEN is output from the AND gate 63.

When the optional modem is loaded in the propriety slot 51, "HIGH" level signal TIRQ is output, and then this signal is supplied to AND gate 64. When the built-in modem is inserted in the built-in modem slot 52, "HIGH" level signal BIRQ is supplied to AND gate 65. As a result, signal output from the AND gate 64 is supplied to one of input terminals of OR gate 66, whereas signal output from the AND gate 65 is supplied to the other input terminal thereof. Upon receipt of the interrupt signal TIRQ from the optional modem, NOR gate 66 outputs the interrupt signal MDIRQ to the interrupt request selector 58.

When an optional slot other than modem is loaded in the propriety slot 51, the signal TSPK remains LOW, and thus, based on this data, a hardware (not shown) assigns the IRQ level. Since assignment of the IRQ level has conventionally been performed, it is not directly related to the invention, and thus, presentation of the drawing and the description thereof is omitted.

Fig. 5 shows correspondence between three kinds of COM levels, interruption levels, and the I/O port base addresses that can be selected for two serial ports A55 and B56, and the exclusive modem (either the built-in modem or an optional modem). As shown in Fig. 5, the interrupt level 4 corresponds to the COM1 level, and the corresponding I/O port base address is "3F8H". The interrupt level 3 is assigned for the COM2 level and the corresponding I/O port base address is "2F8"H. Further, interrupt level "5/12" is assigned for the $COm^3$ level, and the corresponding I/O port base address is either "3E8"H", "2E8"H, or "338"H. When the COM3 level is selected, in accordance with the specification of communication software, these interrupt levels and the I/O port addresses shown above are selected. If the port is desired to be disabled, "Not Used" is selected.

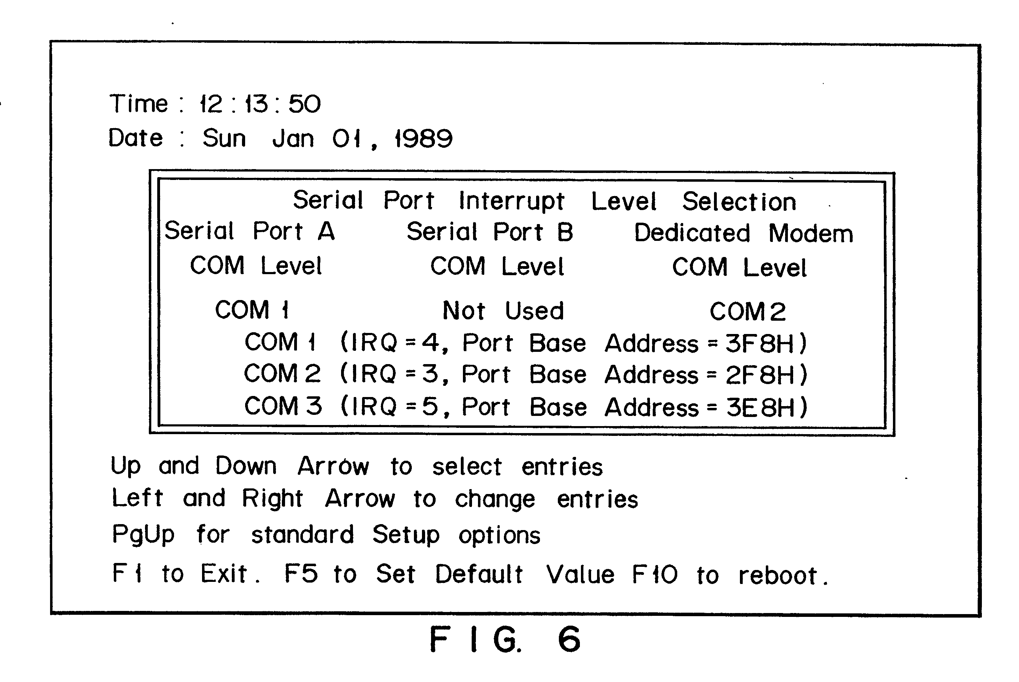

Fig. 6 shows an example of a menu screen for setting the two serial ports and the dedicated modem. In this example, COM1 is selected for the serial port A. "Not Used" is selected for the serial port B. COM2 level is selected for the dedicated modem. These are default values.

The setup program checks the selected COM level. If the identical COM levels are selected by two serial ports or by two dedicated modems, "Not Used" is selected. Selection of these data is executed via the keyboard 43, for example.

Note that in the above embodiment, the interrupt levels and the I/O base addresses for the serial ports and modems are set via the keyboard 43. Nevertheless, these data may also be set by other input means like a mouse or a touch panel, for example.

## Claims

1. A serial interface control system of a personal computer comprising;

serial port means (55, 56);

slot means (51, 52, 53), for allowing connection of an optional board thereto;

means (11, Fig. 6) for setting, by software, interrupt levels and input/output base addresses of said serial port means and optional board.

2. The system according to claim 1, characterized in that said setting means includes keyboard means (43) for entering the interrupt levels and input/output base addresses of said serial port means and said optional board.

3. The system according to claim 1, characterized in that said setting means includes a mouse for entering the interrupt level and the input/output base addresses of said serial port means and said optional boards.

4. The system according to claim 1, characterized in that said serial port means comprises at least one serial port and said slot means comprises at least two slots, and means (61 through 65) are further provided for detecting whether said optional boards are inserted in both of said two slots.

5. The system according to claim 4, characterized by further comprising:

means (57) for decoding input/output addresses set by said setting means and supplying chip select signals to the corresponding serial port and slot.

6. The system according to claim 4, characterized by further comprising:

an industrial standard optional slot (53) and means for causing interrupt level of said industrial standard optional slot (53) to coexist with interrupt levels of said serial ports (55, 56) and optional board (52).

7. The system according to claim 4, characterized in that said setting means includes an input means.

8. The system according to claim 7, characterized in that said input means includes a keyboard.

9. The system according to claim 7, characterized in that said input means inclu]es a mouse.

10. The system according -Lo claim 4, characterized in that said detection means detects whether modem boards are inserted in both of said two slots and means (61 62, 63, 64, 65) is provided for disabling one of the first and second modems in response to the detection of the first and second modems being inserted in said first and second slots.

11. The system according to claim 10, characterized by further comprising means (11, 43, Fig. 6) for setting, in a setup processing of a personal computer, interrupt levels and input/output addresses of said serial ports and said enabled modem.

12. The system according to claim 11, characterized by further comprising an industrial standard slot and means (shown in Fig. 2) for causing interrupt level of said industrial standard option board to coexist with interrupt levels of said serial port and modem.

13. A serial interface control method for use in a personal computer having a plurality of serial ports for connecting input/output units and a plurality of slots for connecting an optional board, characterized in that said method comprises the steps of:

setting, by software, interrupt levels and input/output base addresses of said serial ports and optional board; and

controlling interruption of said serial ports and option board based on the set interrupt level and input/output base addresses.

14. The method according to claim 13, characterized in that said slot comprises a first slot allowing insertion of a first modem therein and a second slot allowing insertion of a second modem therein, and characterized in that said method further comprises steps of:

detecting that said first and second modems are respectively inserted in said first and second slots; and

disabling one of the first and second modems in response to the detection of the first and second modems being inserted in said first and second slots.

15. The method according to claim 14, characterized by further comprising an industrial standard optional slot, and in that said method further comprises a step of causing interrupt level of an industrial standard optional board to coexist with interrupt levels of said serial ports and modems.

F I G. 1

EP 0 418 658 A2

FIG. 2

F I G. 3

F I G. 4

| COM LEVEL | INTERRUPT LEVEL | I/O PORT BASE ADDRESS |
|-----------|-----------------|-----------------------|
| COM 1 | 4 | "3F8" H |
| COM 2 | 3 | "2F8" H |
| COM 3 | 5/12 | "3E8"H/"2E8"H/"338"H |

F I G. 5

```
Time : 12 : 13 : 50
Date : Sun   Jan  01 , 1989

┌─────────────────────────────────────────────────────────┐
│              Serial  Port  Interrupt  Level  Selection    │
│   Serial  Port A        Serial  Port B      Dedicated  Modem │
│     COM  Level            COM  Level           COM  Level  │
│                                                           │
│      COM 1                Not  Used             COM 2     │
│         COM 1  (IRQ = 4, Port  Base  Address = 3F8H )     │
│         COM 2  (IRQ = 3, Port  Base  Address = 2F8H )     │
│         COM 3  (IRQ = 5, Port  Base  Address = 3E8H )     │
└─────────────────────────────────────────────────────────┘

Up  and  Down  Arrow  to  select  entries
Left  and  Right  Arrow  to  change  entries
PgUp  for  standard  Setup  options
F1  to  Exit .  F5  to  Set  Default  Value  F10  to  reboot .
```

## F I G.  6

EP 0 418 658 A2